# EUROPEAN PATENT SPECIFICATION

(11) **EP 1 808 421 B1**
(45) Date of publication and mention of the grant of the patent: **26.03.2014**
(21) Application number: 05798998.0
(22) Date of filing: 25.10.2005
(51) Int. Cl.: C04B 35/63, C04B 35/195, C04B 35/632, C04B 38/00, C04B 35/626, C04B 38/08

(54) **METHOD FOR PRODUCING HONEYCOMB STRUCTURE**
VERFAHREN ZUR HERSTELLUNG EINER WABENSTRUKTUR
PROCÉDÉ SERVANT À PRODUIRE UNE STRUCTURE EN NID D'ABEILLES

(30) Priority: 29.10.2004 JP 2004315326
(43) Date of publication of application: 18.07.2007
(73) Proprietor: NGK Insulators, Ltd., Nagoya-shi, Aichi 467-8530 (JP)
(72) Inventor: Tomita, Takahiro, Nagoya-shi, Aichi 467-8530 (JP); Takahashi, Kaori, Nagoya-shi, Aichi 467-8530 (JP); Morimoto, Kenji, Nagoya-shi, Aichi 467-8530 (JP); Noguchi, Yasushi, Nagoya-shi, Aichi 467-8530 (JP)
(74) Representative: Paget, Hugh Charles Edward
(86) International application number: PCT/JP2005/019567
(87) International publication number: WO 2006/046542

(56) References cited:
- JP-A- 11 092 214
- JP-A- 11 100 259
- JP-A- 11 309 380
- JP-A- 52 123 408
- JP-A- 2002 219 319
- JP-A- 2002 284 582
- JP-A- 2002 530 262
- JP-A- 2004 284 950
- US-A- 6 077 796

## Description

### Technical Field

The present invention relates to a method for producing a honeycomb structure. More particularly, the present invention relates to a method for producing a honeycomb structure, which method enables production of a honeycomb structure well shaped even if organic materials are contained in small amount in the green body.

### Background Art

A honeycomb structure consisting of ceramics has been used for capturing dusts and other particulate substance contained in the automotive exhaust gas and the incineration exhaust gas and so on which is occurred at the time of incinerating the wastes, and furthermore for adsorbing or absorbing the NOx, CO and HC etc. contained in said exhaust gas. Above all in such a honeycomb structure, the cordierite type honeycomb structure is used because it has an excellent thermal shock resistance (refer to Patent Documents 1 and 2, for example).

As the method for producing such cordierite type honeycomb structure, for example, the method, which comprises extrusion forming a green body which has increased plasticity by kneading a ceramic starting material (a forming formulation), water, organic binder and so on, drying and firing, is disclosed (refer to Patent Document 3, for example). In this way, the reason why the organic binders are contained in the green body is that it is difficult to obtain sufficient plasticity and form maintainability by ceramics material powder and water only, therefore the organic binders and so on are contained in the green body to increase the formability.
Patent Document 1: Japanese Patent Application Laid-open 11-92214
Patent Document 2: Japanese Patent Application Laid-open 11-100259
Patent Document 3: Japanese Patent No. 3227039

US-A-6077796 describes, among other compositions for formation of cordierite honeycomb structures, compositions containing talc and one of MgO, Mg(OH)₂ and spinel. The MgO has a particle size of 0.8 µm. The spinel has a particle size of 1.0 µm. The Mg(OH)₂ has a particle size of 6.5 µm. An organic binder content of 3 to 6% based on the raw material is mentioned.

### Disclosure of the Invention

The formability of the cordierite type honeycomb structure improves according to the adding amount of the organic binder which gives plasticity and form maintainability. However, if much amount of the organic binder is added, the spaces which are occupied by the organic binder at the time of forming may change to be defects, because the organic binder will be burnt out at the time of firing. Therefore, there is a problem that the number of the defects in the honeycomb structure is increased according to the adding amounts of the organic binder and this may lead to the decrease of the mechanical strength as the honeycomb structure. Furthermore, in case of large size honeycomb structures, when the organic binders burn at the time of firing, high thermal stress is occurred by the temperature difference between the inner and the outer of the honeycomb structure because the temperature of the inner part of the honeycomb structure is to be higher than that of the outer part of the honeycomb structure, and this may lead to occurrence of many defects such as cracks. By this, there is a problem that not only the mechanical strength is decreased as the honeycomb structure but also the productivity or yield is decreased greatly. Furthermore, there also are serious environmental problems such as air pollution, global warming or the like because the releasing CO₂ or poison gases, which are produced by burning the organic binder at the time of firing, into the atmospheric air.

The present invention is made in reference to the above mentioned problems, and characterized in that providing a method for producing honeycomb structure which is possible to obtain an well shaped honeycomb structure, even though the organic substance, particularly organic binders, in the green body are less amount, and providing a honeycomb structure obtained by the method for producing the same.

In order to achieve the above aim, according to the present invention, the method for producing a honeycomb structure as set out in claim 1 is provided.

Preferably the second magnesium-containing material is contained at 40% by mass or less to the total of said first magnesium-containing material and said second magnesium-containing material.

Preferably, the second magnesium-containing material is at least one material selected from magnesium hydroxide, magnesium oxide, magnesium carbonate, magnesium silicate other than talc, and magnesium aluminate.

Preferably kaolin, alumina, aluminium hydroxide, and silica are contained in said forming formulation.

According to the method for producing a honeycomb structure of the present invention, the formability of the honeycomb structure is increased even if the organic binder is contained less amount in the green body, because talc (the first magnesium-containing material) and the predetermined second magnesium-containing material which has an average particle diameter of 4 µm or less are present in the forming formulation as the magnesium source to form the cordierite. According to this method, it is possible to form a honeycomb structure well, and therefore it is possible to obtain a high quality honeycomb structure.

### Best Mode for Carrying out the Invention

The best embodiment (to be referred to as the "carried out embodiment" hereinafter) for carrying out the present invention is herein below described concretely, but the present invention is not limited to the embodiment described below by any means. And it should be understood that any design changes, improvements and so on are possible according to the skilled person in the art without any deviation from the concept of the present invention.

A method for producing a honeycomb structure of the present invention, which comprises forming a honeycomb formed article by shaping a green body containing a forming formulation composed of a cordierite forming material into a honeycomb shape, and firing the honeycomb formed article to obtain a honeycomb structure, wherein said forming formulation contains two or more types of magnesium-containing materials containing at least talc (the first magnesium-containing material), and a magnesium-containing material other than talc in the magnesium-containing materials (the second magnesium-containing material) has an average particle diameter of 4 µm or less. The containing ratio of said organic binder is 2% by mass or less relative to the total amount of said forming formulation.

In the present invention, the forming formulation composed of a cordierite forming material is compounded to be the same composition with cordierite (cordierite composition) by mixing the predetermined ceramic materials, so that it forms cordierite by firing. As the preferable composition of the cordierite, it is possible to raise 2MgO · 2Al₂O₃ · 5SiO₂, for example. And, talc which is the first magnesium-containing material and the second magnesium-containing material are the magnesium sources of the cordierite (in case of containing aluminium or silicon in addition to magnesium, it may also be aluminium source and silicon source in addition to magnesium source, too).

In the forming formulation, talc (3MgO · 4SiO₂ · H₂O) is usually preferably used as the magnesium source. By using talc, it is possible to reduce the thermal expansion coefficient of the obtained cordierite. However, talc is hydrophobicity at the surface thereof and has a property which does not get wet with water. In case of preparing a green body by kneading the forming formulation with water then extruding forming by using such green body, if such material which does not get wet with water is contained in much amount, the formability may be worse and worse, then deformation, cracks or agnails may be occurred in the honeycomb structure. Therefore, increasing of the formability is tried by using the organic binder in amount of proportion with the mixing amount of talc, but the using the organic binder is to be the reason of the reducing the mechanical strength of the honeycomb structure and the environmental pollution, therefore it is preferable to use the organic binder as less amount as possible.

In the method for producing a honeycomb structure of the present invention, in order to increase the formability of the honeycomb structure under reducing the using amount of the organic binder like this, firstly the adding amount of talc is reduced, secondly the magnesium source which has smaller average particle diameter (the second magnesium-containing material) is used, instead. And, it is preferable that the second magnesium-containing material is the one which easily gets wet with water than talc. By using the second magnesium-containing material which easily gets wet with water, it is possible to increase the formability because the plasticity of the green body is increased, and furthermore, the second magnesium-containing material also performs the function as the form maintaining agent which keeps the form of the honeycomb structure. By employing whole process mentioned above, it is possible to produce the high quality honeycomb structure.

Here, it is possible to raise the contact angle as the index of the wettability with water. The contact angle means the angle made of a liquid surface and solid surface (the angle inside the liquid is used) at the place at which the free surface of the standstill liquid contacts the wall of the solid (surface), and the smaller contact angle means more easy to wet. As the contact angle of powder, firstly, the "apparent contact angle" is defined which is explained below, then it is used as the contact angle or the index of wettability. The "apparent contact angle" is measured by dropping droplet (about 0.1 cm ³) of distilled water on the pellet (φ 20mm × t 5mm) which is formed by the one axis pressure forming of the powder to be tested, the view is taken by video camera, analyzing the form of the droplet immediately after contacting the droplet to the pellet, then measuring the contact angle, and this is to be the "apparent contact angle." As to each contacting angle of the magnesium-containing material, 40-70° for talc, 5-35° for magnesium hydroxide, 7-35° for magnesium oxide, 10-38° for magnesium silicate, and 5-37° for magnesium aluminate, respectively. As the value of the "apparent contact angle" of the second magnesium-containing material, it is preferable to be less than 40°, more preferably 35° or less.

As the second magnesium-containing material, it is preferable to use in the form of powder having an average particle diameter of 4 µm or less, more preferably 3.5 µm or less, further preferably 3.0 µm or less. If larger than 4 µm, it is difficult to obtain the single cordierite crystal phase, and further the thermal expansion coefficient of the cordierite (the honeycomb structure) obtained is to be larger. The average particle diameter is the value measured by the laser diffraction scattering method (according to JIS R 1629).

The second magnesium-containing material is preferably at least one material selected from the group consisting of magnesium hydroxide (Mg(OH)₂), magnesium oxide (MgO), magnesium carbonate (MgCO₃), magnesium silicate other than talc, and magnesium aluminate, and more preferably at least one material selected from the group consisting of magnesium hydroxide, magnesium oxide and magnesium carbonate. All of these materials have the property which easily get wet with water than talc, it is possible to improve the formability. As the magnesium silicate other than talc, it is possible to raise enstatite (MgSiO₃) and forsterite (Mg₂SiO₄) and so on. And as the magnesium aluminate, it is possible to raise spinel (MgAl₂O₄) or the like.

As the containing ratio of the first magnesium-containing material and the second magnesium-containing material contained in the forming formulation, it is preferable that the second magnesium-containing material is contained 40% by mass or less to the total of said first magnesium-containing material and said second magnesium-containing material, and more preferably 30% by mass or less. If more than 40% by mass, it is difficult to obtain a cordierite single crystalline phase at the time of firing to form cordierite, and the thermal expansion coefficient of the obtained cordierite (honeycomb structure) is to be larger.

As to the talc which is the first magnesium-containing material, usually powder form is used, and the average particle size is not limited particularly, but 0.1-50 µm is preferable, and more preferably 0.5-40 µm.

In the method for producing a honeycomb structure of the carried out embodiment, as the material contained in the forming formulation, it is possible to choose appropriately the material which converts into the cordierite composition (2MgO · 2 Al₂O₃ · 5SiO₂) other than the above mentioned first magnesium-containing material and the second magnesium-containing material as the whole by firing. For example, it is preferable to contain kaolin (Al₂O₃ · 2SiO₂ · 2H₂O), alumina(Al₂O₃), aluminium hydroxide (Al(OH)₃), silica (SiO₂). Other than these materials, it is possible to use mullite (3Al₂O₃ · 2SiO₂), boehmite (AlOOH), calcined talc and so on.

In the method for producing a honeycomb structure of the carried out embodiment, the above mentioned first magnesium-containing material and the second magnesium-containing material and so on are mixed to be the forming formulation consisting of the cordierite forming material. As the mixing device, it is possible to use the apparatus which is used normally for powder mixing.

In the method for producing a honeycomb structure of the carried out embodiment, the green body is obtained by adding the organic binder to the forming formulation and kneading thereof, it is preferable to prepare the green body by also adding the organic materials such as pore forming materials, surfactants and so on other than the organic binder, and kneading thereof.

The organic binder has the function as the form maintaining agent which maintains the form of the honeycomb shape, as well as improving the plasticity and formability of the green body. On the other hand, the organic binder has problems that the space the organic binder occupied at the time of shaping may be defects by firing, or may produce the cracks in the honeycomb structure and this may leads to reduce the mechanical strength of the honeycomb structure, and therefore it is preferable to reduce the containing amount of the organic binder in the green body to be as minimum as possible. And, from the environment problem point of view, it is also preferable to reduce the containing amount of the organic binder as minimum as possible. From these reasons, the amount of the organic binder in the present invention is 2% by mass or less. Sometimes, even 0% by mass is acceptable for the present invention.

As these kinds of the organic binders, it is possible to raise the organic macromolecules, for example. More concretely, it is possible to raise hydroxypropoxyl methylcellulose, hydroxypropyl methylcellulose, methylcellulose, hydroxyl ethylcellulose, carboxyl methylcellulose, polyvinylalcohol, and so on. The organic binders are possible to use one kind solely or combination of the two kinds or more.

In the method for producing a honeycomb structure of the carried out embodiment, it is preferable to include a pore forming agent in the green body, in case of manufacturing the honeycomb structure having high porosity. These kinds of pore forming agents create the pores having desirable shape, size, distribution in the honeycomb structure, and increase the porosity, and therefore it is possible to obtain the honeycomb structure having high porosity. As this kind of pore forming agent, it is possible to raise, for example, graphite, wheat flour, starch, phenolic resin, polymethacrylicmethyl, polyethylene, polyethyleneterephthalate, or foaming resin (acrylonitrilic plastic balloon) or the like. These materials will be burnt out after forming pores. Above all, the foaming resin is preferable from the view point of restraining the outbreak of CO₂ and harmful gas and also restraining occurring the cracks in the honeycomb structure. Furthermore, in case of using the pore forming agents, the containing ratio of the pore forming agents is not limited particularly, but preferably 15% by mass or less, more preferably 13% by mass or less, to total amount of the green body. If more than 15% by mass, the mechanical strength of the honeycomb structure obtained may be reduced.

In the method for producing a honeycomb structure of the carried out embodiment, it is preferable to include a surfactant in the green body. The orientation of the material particles are easily occurred by the surfactant at the time of extrusion forming, as well as surfactant increases the dispersibility of the material particles. Of course, the surfactant also increases the wettability of talc by acting to the hydrophobicity surface of talc particles. As the surfactant, any of anionic, cationic, nonionic, or amphoteric are possible to be used, however, anionic surfactant such as fatty acid salt, alkyl sulfuric acid ester salt, polyoxyethylene alkylether sulfuric acid ester salt, polycarboxylic acid solt, polyacrylic acid salt, and nonionic surfactant such as polyoxyethylene alkylether, polyoxyethylene glycerin fatty acid ester, polyoxyethylene sorbitan (or sorbitol) fatty acid ester and so on are raised as examples. The lauric acid potassium is particularly preferable from the orientation point of view of the particle materials.

Furthermore, it is preferable to include water as disperse vehicle in the green body. As to the ratio of adding the disperse vehicle, it is possible to adjust the amount of the disperse vehicle so that the green body has an appropriate hardness at the time of forming. The amount of the disperse vehicle is preferably 10-50% by mass to the total of the forming formula. In the method for producing a honeycomb structure of the carried out embodiment, the excellent effect is shown for preparing the green body by kneading the forming formula by containing water. By using water as the disperse vehicle and using the one part of magnesium-containing material (the second magnesium-containing material) which is easily get wet with water, the forming formula is getting familiar with the water, and the formability is increased thereby.

In the method for producing a honeycomb structure of the carried out embodiment, there is no particular limitation to prepare the green body by adding the organic materials (the organic binder, the pore forming agents, the surfactant and so on) and kneading thereof, it is possible to raise the method which uses the kneader, the de-airing pugmill or the like.

In the method for producing a honeycomb structure of the carried out embodiment, it is preferable to shape the green body into the honeycomb shape, and to form a honeycomb formed article by drying thereof There is no particular limitation for the configuration of honeycomb shape, it is possible to indicate, for example, the body which has plurality of cells are formed penetrating between a pair of end faces by honeycomb shaped partition walls. For using the honeycomb shape as a filter such as DPF or the like, it is preferable to plug the one end of the cell and another end of the adjacent cell alternatively. Also, there is no limitation for the outer configuration of the honeycomb shape, it is possible to raise, for example, cylindrical, quadratic prism, triangular prism and the like. Furthermore, there is also no limitation for the configuration of cells (cell configuration in the cross section perpendicular to the direction of the cell formation) of the honeycomb shape, it is possible to raise, for example, quadrangular, hexagonal, triangular or the like.

There is no particular limitation for preparing the honeycomb formed article, it is possible to use the traditionally known forming process such as extrusion forming, injection forming, and press forming and so on. Above all, it is possible to indicate the extrusion forming method by using the extrusion dies which has a desired cell configuration, wall thickness, cell density to extrude the prepared green body mentioned above, as the most preferable example. Also, there is no particular limitation for the method of drying, it is possible to use any traditionally known drying process such as hot air drying, micro wave drying, dielectric drying, decompression drying, vacuum drying, freeze drying and so on. Above all, it is preferable to use the combination drying process of hot air drying, and micro wave drying or dielectric drying, because it is possible to dry quickly and uniformly the honeycomb shape as a whole.

In the method for producing a honeycomb structure of the carried out embodiment, the honeycomb formed article may be calcined before the final firing. The "calcination" in the present invention means the operation which removes any kinds of organic materials (binder, pore forming agent, surfactant or the like) in the honeycomb shape by combustion, it is also called as the resin removal or the binder removal, too. The calcination temperature should be in the order of 100 - 800°C because the burning temperature of the organic binder is in the order of 100 - 300°C, and the burning temperature of the pore forming agent is in the order of 200 - 800°C, and the burning temperature of the surfactant is in the order of 100 - 400°C in general. The calcinaton time is in the order of 1 - 20 hours usually, even though there is no particular limitation, but in the present invention, the calcinations time can be reduced much shorter, because it is possible to use small amount of the organic binder. More concretely, calcinations time is in the order of 0.5 - 10 hours. By this, the productivity is improved because it is possible to reduce the manufacturing time.

Finally, the porous honeycomb structure is obtained by firing (main firing or final firing) the calcined body obtained mentioned above. The "main firing" of the present invention means the operation which attains the predetermined mechanical strength by densifying through sintering the forming material of the calcined body. As the firing conditions (temperature and time), it is preferable to fire the ceramic formed body at 1300 - 1500°C and 1350 - 1450°C is more preferable. If lower than 1300°C, it may difficult to obtain the aimed cordierite single crystal phase, and if higher than 1500°C, the melting may be occurred. And as the firing atmosphere, it is possible to raise the air atmosphere, the atmosphere in which oxygen and nitrogen is mixed in predetermined ratio, and so on. Further, firing time is preferably in the order of 1-12 hours.

The honeycomb structure of the present invention is one which is obtained by the above mentioned producing method, and it is the honeycomb structure having high quality (less defects and cracks, smaller thermal expansion coefficient).

The honeycomb structure of the present invention is preferably having the thermal expansion coefficient of 1.7 × 10⁻⁶K⁻¹ or less, more preferably 1.5 × 10⁻⁶K⁻¹ or less. If larger than 1.7 × 10⁻⁶K⁻¹, the thermal shock resistance of the honeycomb structure is decreased, and it may be destroyed by the thermal stress at the time of actual use.

### Example

The present invention will be explained by examples below, but the present invention is not restricted at all by these examples.

### (Examples 1-15)

Talc as the first magnesium-containing material and the second magnesium-containing material (the second magnesium source) as shown in the Table 1 are mixed so that the containing ratio of the second magnesium source to the total amount of talc and the second magnesium source is to be respective value as shown in Table 1. The average particle diameter (particle size) (µm) of the second magnesium source used is also shown in Table 1. The cordierite forming material (the forming formula) is prepared by adding kaolin, alumina, aluminium hydroxide and silica thereto. The cordierite forming material is the starting material (raw material) having the composition which converts into the cordierite by firing. The average particle diameter is the value measured by the laser diffraction scattering method (according to JIS R 1629).

Then the green body is obtained by adding methylcellulose as the organic binder in the amount shown in Table 1 (the organic binder (% by mass)) to the total amount of the forming formula, further, adding 0.5% by mass of lauric acid as the surfactant to the total of the forming formula, and adding 30% by mass of water to the total amount of the forming formula, and by kneading thereof

The obtained green body is formed by extrusion forming to the honeycomb shape using the die which can form the honeycomb shape having 300 µm of wall thickness, cell density of 300 cells/inch² (= 46.5 cells/cm²). The obtained formed article having a honeycomb shape is the one which has no abnormality in forming pressure, defects, or cracks. The appearance of the shape is also shown in Table 1. Then, the obtained formed article having a honeycomb shape is dried by hot air drying after dielectric drying to obtain the honeycomb formed article, the obtained honeycomb formed article is fired by 1420°C, 4 hours in the air atmosphere to obtain the final honeycomb structure (Examples 1-15).

**Table 1 Com. Exam.: Comparative Example**

| | Second magnesium source | Particle size of second magnesium source | Ratio of second magnesium source | Organic binder | Appearance at the time of forming | Thermal expansion coefficient |
|---|---|---|---|---|---|---|
| | | (µm) | (% by mass) | (% by mass) | | (×10⁻⁶K⁻¹) |
| Example 1 | MgO | 1 | 5 | 2 | Fine | 1.1 |
| Example 2 | MgO | 1 | 10 | 2 | Fine | 1.3 |
| Example 3 | MgO | 1 | 20 | 2 | Fine | 1.3 |
| Example 4 | MgO | 1 | 40 | 2 | Fine | 1.4 |
| Example 5 | Mg(OH)₂ | 0.6 | 5 | 2 | Fine | 1.0 |
| Example 6 | Mg(OH)₂ | 0.6 | 10 | 2 | Fine | 1.2 |
| Example 7 | Mg(OH)₂ | 0.6 | 20 | 2 | Fine | 1.4 |
| Example 8 | Mg(OH)₂ | 0.6 | 40 | 2 | Fine | 1.4 |
| Example 9 | MgCO₃ | 1.2 | 5 | 2 | Fine | 1.1 |
| Example 10 | MgCO₃ | 1.2 | 10 | 2 | Fine | 1.2 |
| Example 11 | MgCO₃ | 1.2 | 20 | 2 | Fine | 1.3 |
| Example 12 | MgCO₃ | 1.2 | 40 | 2 | Fine | 1.5 |
| Example 13 | MgO | 1 | 50 | 2 | Fine | 1.7 |
| Example 14 | Mg(OH)₂ | 0.6 | 50 | 2 | Fine | 1.6 |
| Example 15 | MgCO₃ | 1.2 | 50 | 2 | Fine | 1.7 |
| Com. Exam 1 | MgO | 1 | 50 | 6 | Fine | 2.0 |
| Com. Exam 2 | MgO | 5 | 40 | 6 | Fine | 1.8 |
| Com. Exam 3 | Mg(OH)₂ | 0.6 | 50 | 6 | Fine | 1.9 |
| Com. Exam 4 | Mg(OH)₂ | 6 | 40 | 6 | Fine | 1.8 |
| Com. Exam 5 | MgCO₃ | 1.2 | 50 | 6 | Fine | 1.9 |
| Com. Exam 6 | MgCO₃ | 6 | 40 | 6 | Fine | 2.0 |
| Com. Exam 7 | MgO | 5 | 40 | 2 | Pressure increase | - |
| Com. Exam 8 | Mg(OH)₂ | 6 | 40 | 2 | Pressure increase | - |
| Com. Exam 9 | MgCO₃ | 6 | 40 | 2 | Pressure increase | - |
| Com.Exam10 | None | - | - | 6 | Fine | 0.9 |
| Com.Exam11 | None | - | - | 2 | Pressure increase | - |

The X-ray diffraction identification of the obtained honeycomb structure shows that the cordierite is the main crystalline phase. All of the obtained honeycomb structures have the thermal expansion coefficient of less than 1.7 × 10⁻⁶K⁻¹ as shown in Table 1.

### (Comparative Examples 1-9)

Talc as the first magnesium-containing material and the second magnesium-containing material (the second magnesium source) as shown in the Table 1 are mixed so that the containing ratio of the second magnesium source to the total amount of talc and the second magnesium source is to be respective value as shown in Table 1. The average particle diameter (particle size) (µm) of the second magnesium source used is also shown in Table 1. The cordierite forming material (the forming formula) is prepared by adding kaolin, alumina, aluminium hydroxide and silica thereto.

Then the green body is obtained by adding methylcellulose as the organic binder in the amount shown in Table 1 (the organic binder (% by mass)) to the total amount of the forming formula, further, adding 0.5% by mass of lauric acid potassium as the surfactant to the total of the forming formula, and adding 30% by mass of water to the total amount of the forming formula, and by kneading thereof.

The obtained green body is formed by extrusion forming to the honeycomb shape using the die which can form the honeycomb shape having 300 µm of wall thickness, cell density of 300 cells/inch² (= 46.5 cells/cm²). The obtained formed article having a honeycomb shapes of the comparative examples 1-6 are the one which has no abnormality in forming pressure, defects, or cracks, however, in the comparative examples 7-9, abnormality in forming pressure (pressure rising) is recognized, and therefore the formed article was not obtained. The appearance of the shape is also shown in Table 1. Then, the obtained formed article having a honeycomb shape is dried by hot air drying after dielectric drying to obtain the honeycomb formed article, the obtained honeycomb shape is fired by 1420°C, 4 hours in the air atmosphere to obtain the final honeycomb structure.

The X-ray diffraction identification of the obtained honeycomb structure shows that the cordierite is the main crystalline phase. All of the obtained honeycomb structures have the thermal expansion coefficient of larger than 1.7 × 10⁻⁶K⁻¹ as shown in Table 1.

### (Comparative Examples 10, 11)

The cordierite forming material (the forming formula) is prepared by adding kaolin, alumina, aluminium hydroxide and silica to talc as the first magnesium-containing material (the second magnesium-containing material is not used).

Then the green body is obtained by adding methylcellulose as the organic binder in the amount shown in Table 1 (the organic binder (% by mass)) to the total amount of the forming formula, further, adding 0.5% by mass of lauric acid potassium as the surfactant to the total of the forming formula, and adding 30% by mass of water to the total amount of the forming formula, and by kneading thereof.

The obtained green body is formed by extrusion forming to the honeycomb shape using the die which can form the honeycomb shape having 300 µm of wall thickness, cell density of 300 cells/inch² (= 46.5 cells/cm ²). In the comparative example 10, the obtained formed article having a honeycomb shape is the one which has no abnormality in forming pressure, defects, or cracks, however, in the comparative example 11, abnormality in forming pressure (pressure rising) is recognized, and therefore the formed article was not obtained. The appearance of the shape is also shown in Table 1. Then, the obtained formed article having a honeycomb shape is dried by hot air drying after dielectric drying to obtain the honeycomb formed article, the obtained honeycomb formed article is fired by 1420°C, 4 hours in the air atmosphere to obtain the final honeycomb structure.

The X-ray diffraction identification of the obtained honeycomb structure shows that the cordierite is the main crystalline phase. All of the obtained honeycomb structures have the thermal expansion coefficient of less than 1.7×10⁻⁶K⁻¹ as shown in Table 1.

### Industrial Applicability

The present invention can be utilized to produce the honeycomb structure suitably used in various kinds of separating apparatus and purifying apparatus preventing the environmental pollution and the global warming, in the fields of chemical, electric power, steel, industrial waste processing, or the like.

## Claims

1. A method for producing a honeycomb structure, which comprises:
forming a honeycomb formed article by shaping a green body containing a forming formulation composed of a cordierite forming material and an organic binder into a honeycomb shape, and
firing the honeycomb formed article to obtain a honeycomb structure,
wherein said forming formulation contains two or more types of magnesium-containing materials comprising talc as a first said magnesium-containing material and a magnesium-containing material other than talc as a second said magnesium-containing material, wherein said second magnesium-containing material has an average particle diameter of 4µm or less,
**characterized in that** the amount of said organic binder is 2% by mass or less relative to the total amount of said green body.

2. A method for producing a honeycomb structure according to Claim 1, wherein said second magnesium-containing material is present at 40% by mass or less relative to the total of said first magnesium-containing material and said second magnesium-containing material.

3. A method for producing a honeycomb structure according to Claim 1 or 2, wherein said second magnesium-containing material is at least one of magnesium hydroxide, magnesium oxide, magnesium carbonate, magnesium silicate other than talc, and magnesium aluminate.

4. A method for producing a honeycomb structure according to any one of Claims 1 to 3, wherein kaolin, alumina, aluminium hydroxide and silica are contained in said forming formulation.

## Patentansprüche

1. Verfahren zur Herstellung einer Wabenstruktur, das Folgendes umfasst:
das Bilden eines wabenförmigen Gegenstands durch Formen eines Grünkörpers, der eine Bildungsformulierung, zusammengesetzt aus einem Cordierit bildenden Material und einem organischen Bindemittel, enthält, in eine Wabenform und
das Brennen des wabenförmigen Gegenstands, um eine Wabenstruktur zu erhalten,
worin die Bildungsformulierung zwei oder mehrere Arten von magnesiumhältigen Materialien enthält, die Talk als ein erstes magnesiumhältiges Material und ein magnesiumhältiges Material, das nicht Talk ist, als zweites magnesiumhältiges Material umfassen, worin das zweite magnesiumhältige Material einen mittleren Partikeldurchmesser von 4 µm oder weniger aufweist,
**dadurch gekennzeichnet, dass** die Menge des organischen Bindemittels 2 Masse-% oder weniger, bezogen auf die Gesamtmenge des Grünkörpers, beträgt.

2. Verfahren zur Herstellung einer Wabenstruktur nach Anspruch 1, worin das zweite magnesiumhältige Material zu 40 Masse-% oder weniger, bezogen auf die Summe des ersten magnesiumhältigen Materials und des zweiten magnesiumhältigen Materials, vorhanden ist.

3. Verfahren zur Herstellung einer Wabenstruktur nach Anspruch 1 oder 2, worin das zweite magnesiumhältige Material zumindest eines aus Magnesiumhydroxid, Magnesiumoxid, Magnesiumcarbonat, Magnesiumsilicat außer Talk und Magnesiumaluminat ist.

4. Verfahren zur Herstellung einer Wabenstruktur nach einem der Ansprüche 1 bis 3, worin Kaolin, Aluminiumoxid, Aluminiumhydroxid und Siliciumdioxid in der Bildungsformulierung enthalten sind.

## Revendications

1. Procédé pour produire une structure de nid d'abeilles, qui comprend :
la formation d'un article formé en nid d'abeilles par formage d'un corps vert contenant une formulation de formage composée d'un matériau formant une cordiérite et un liant organique en forme de nid d'abeilles, et
la cuisson de l'article formé en nid d'abeilles pour obtenir une structure de nid d'abeilles,
ladite formulation de formage contenant deux types ou plus de matériaux contenant du magnésium comprenant du talc en tant que premier desdits matériaux contenant du magnésium et un matériau contenant du magnésium autre que le talc en tant que deuxième desdits matériaux contenant du magnésium, ledit deuxième matériau contenant du magnésium ayant un diamètre de particule moyen de 4 µm ou moins,
**caractérisé en ce que** la quantité dudit liant organique est de 2 % en masse ou moins par rapport à la quantité totale dudit corps vert.

2. Procédé pour produire une structure de nid d'abeilles selon la revendication 1, dans lequel ledit deuxième matériau contenant du magnésium est présent à 40 % en masse ou moins par rapport au total dudit premier matériau contenant du magnésium et dudit deuxième matériau contenant du magnésium.

3. Procédé pour produire une structure de nid d'abeilles selon la revendication 1 ou 2, dans lequel ledit deuxième matériau contenant du magnésium est au moins l'un parmi l'hydroxyde de magnésium, l'oxyde de magnésium, le carbonate de magnésium, le silicate de magnésium autre que le talc, et l'aluminate de magnésium.

4. Procédé pour produire une structure de nid d'abeilles selon l'une quelconque des revendications 1 à 3, dans lequel du kaolin, de l'alumine, de l'hydroxyde d'aluminium et de la silice sont contenus dans ladite formulation de formage.
